# EUROPEAN PATENT APPLICATION

(11) **EP 1 266 680 A1**
(43) Date of publication of application: **18.12.2002**
(21) Application number: 02710859.6
(22) Date of filing: 17.01.2002
(51) Int. Cl.: B01D 35/15, B01D 35/157, B01D 29/58, B01D 63/06, B01D 25/02

(54) **FLUID FILTERING SYSTEM AND THE FILTER USED IN SAID SYSTEM**

(30) Priority: 19.01.2001 ES 200100172
(71) Applicant: Membrane Concepts S.L., 08660 Balsareny, Barcelona (ES)
(72) Inventor: THOMASSEN, Johannes, A., Membrane Concepts, S.L., E-8660 Balsareny (Barcelona) (ES)
(74) Representative: Pastells Teixido, Manuel
(86) International application number: ES0200020
(87) International publication number: WO02056998

(57) **Abstract**

The invention relates to a system comprising an installation made up of membrane filters and which is characterised in that the fluid to be filtered is first supplied to the installation so that it flows in a determined direction and subsequently the fluid is supplied to the installation in the opposite direction. The installation comprises valve devices which are used to regulate the flow of the fluid that is supplied and to mix the flow of the fluid supplied to the installation through different points of the installation. The filters disposed in the installation are directly connected to one another in such a way that tubes external to said filters are not required. The filter used in said system is characterised in that its structure allows the flow of the fluid to be reversed.

## Description

Installations for filtering fluids which use cylindrically shaped membrane filters, the fluids being generally liquid, are already well known.

In these installations, the liquid passes from one filter to another until it exits via the last filter in the installation. This causes bacterial growth in the filters together with a gradual build up of deposits and impurities on the filter elements which can be rendered totally ineffective as this process is irreversible.

One of the purposes of this invention is precisely to remove this drawback in order to obtain a higher performance installation and to prolong the effective functionality of the filter elements.

To this purpose, one of the characteristics of the filtering system is that the fluid to be filtered is fed into the installation first flowing in a given direction and then the fluid is fed into the same installation in the opposite direction, thus avoiding the waste deposits described above on the filter elements of the final filters in this installation, thus prolonging the functional life of the filter membranes.

Another characteristic of this invention is that this inversion of the fluids flow direction is complemented with a mix of flows. To this purpose, the installation is equipped with valves which regulate the flow of fluid supplied to the installation, and which serve also to mix the flow supplied to the installation from different entry points.

This system offers a correct hydraulic balance as the flow rate and speed of the fluid in the different filters forming the installation is controlled in order to recover the maximum amount of clean liquid which is also of excellent quality.
Another of the characteristics of the system is that the installation filters are connected directly to each other, without the use of external piping. This simplifies the installation considerably while also reducing the cost to a large extent.

This direct connection between the filters is achieved using the end filterheads of the body of each filter.

Naturally, in order to achieve the inversion of the fluid direction and the direct connection between the filters, membrane filters are necessary which have a body suitable for this inversion in the liquid direction and the filterheads of these bodies must be prepared for the direct connections.

In this system it is preferable to use membrane filters with body under the Spanish UM 200002987 (ES 1047795) and with filterheads connected to the body of the filter, in accordance with UM 200002986 (ES 1047914) and 200100127 (ES 1048685), which filters have a structure which allows a reversible fluid flow.

These and other characteristics are better displayed in the detailed description below, accompanied by two pages of drawings showing a practical case and which is mentioned as a practical example of the scope of this invention, though not limited to same:
Figures 1 and 2 show a diagram of the installations in a 4-2-1 formation and the re-circulation circuit respectively, in which this invention's system is used,
figure 3 shows a diagram of a installation using this system with mixing of the fluid flow, and
figure 4 shows the details of the filters and of its connections used in this system in a lengthwise section.

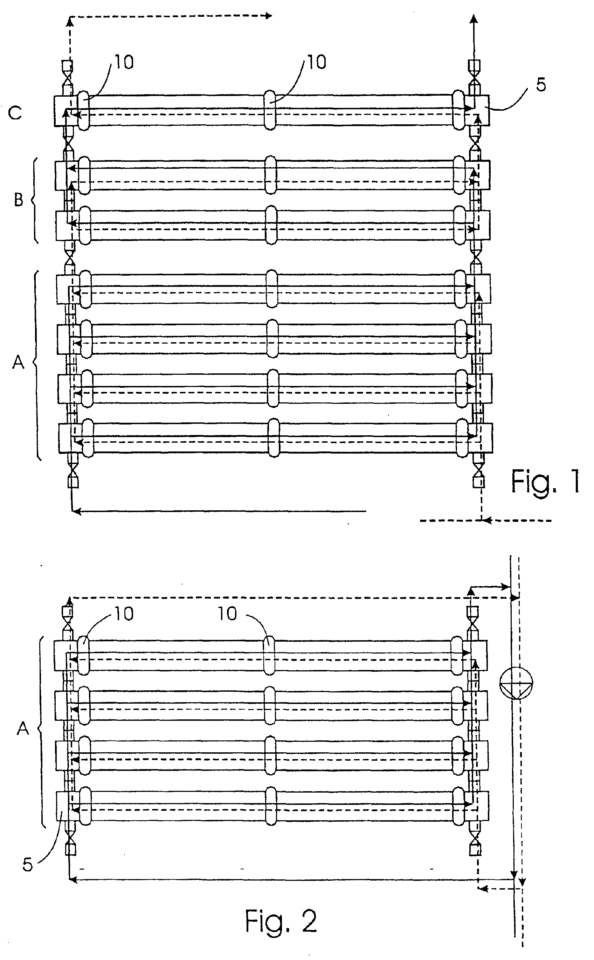

Figure 1 shows a installation of the 4-2-1 type, known as a "Christmas Tree", in which the system is used with reversal of the fluid direction under this invention. These 4-2-1 installations have a first filtering phase in which the fluid is fed to a group - A - of four membrane filters; in the second phase, the fluid is filtered in a group - B - of two filters and then the fluid is fed into a third phase formed by one - C - filter, while the path of the fluid is shown in broken lines and arrows.

According to this system, the fluid is then fed to the installation in the opposite direction, this new path being represented by broken lines and arrows.

Figure 2 shows a installation of the re-circulation circuit type (single or multi-phase). In this case the installation comprises a group - A- of four filters with the fluid passing through all of them, first flowing in the direction shown by the continuous lines and arrows and then the fluid passes again through the filters but with the flow reversed as shown by the broken lines and arrows.

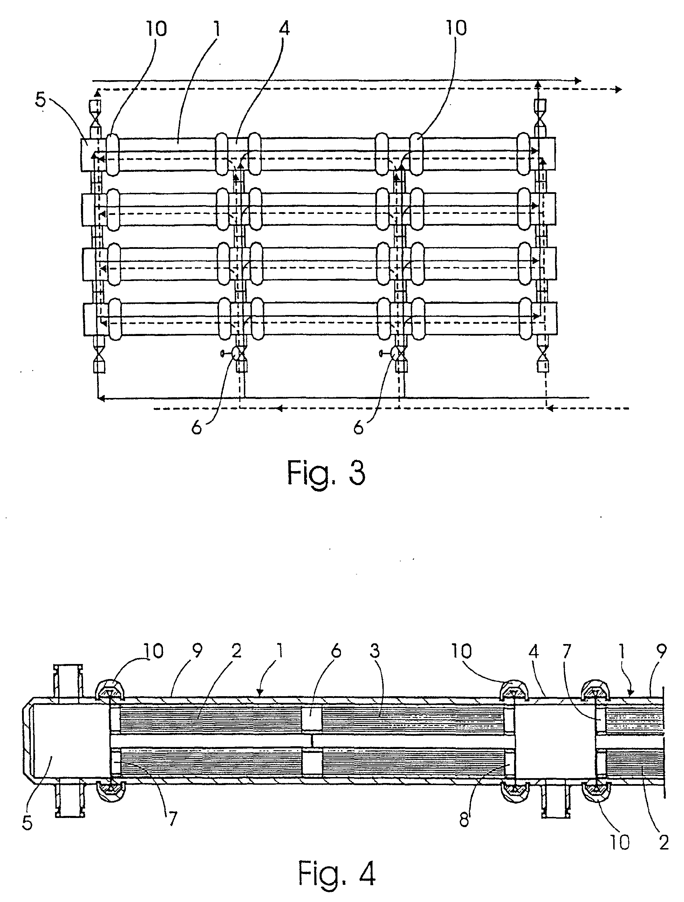

Figure 3 shows a installation in which the fluid also passes first with the flow in one direction and then in the opposite direction, and also mixes the fluid flows.

This installation comprises filters 1 consisting of two filter elements 2 and 3 (figure 4), connected by connector elements 4 and heads 5, forming four rows of three filters each, with valves in the lower part 6. This installation achieves complete flow balance within the membrane filtering system, as fluid can be introduced in a regulated fashion at several points of the installation.

As can be seen in figures 1, 2 and 3, in the installations shown, the filters are connected to each other without the need for external piping.

In order to achieve the reversal of the fluid flow, filters should be used with a structure which allows such reversal.

Figure 4 shows the filter and the connections used in the system which is the subject of this invention and which are filters under UM 200002987 (ES1047795) and the heads and connecting elements under UM 200002986 (ES 1047914) and 200100127 (ES 1048685). These filters 1 comprise several filter elements 2-3 connected to each other coaxially with connection elements 6 to form an assembly which has end parts 7 and 8 at each end, with the entire assembly surrounded by a layer 9 molded over it from glass fiber and resin which after hardening, forms the rigid, cylindrical external surface of the membrane filter body. The heads 5 are connected to the filter bodies by a clamp 10 which has a U section creating two peripheral internal edges which fit into peripheral grooves near the filter body ends and the filterhead end opposite the filter body. The connection between the filter bodies using connection elements 4 also comprises clamps -10-.

## Claims

1. A fluid filtering system, which comprises a installation formed by membrane filters, in which the fluid to be filtered is fed into the installation first with the flow in a certain direction and then fed into the same installation with the flow reversed.

2. A A fluid filtering system, according to claim 1, in which the installation comprises valves which regulate the fluid flow and which mix the flow which is fed into the installation from different points of same.

3. A fluid filtering system, according to the above claims, in which the filters which make up the installation are directly connected to each other without the need for external piping.

4. A fluid filtering system, according to claim 3, in which the filters are connected to each other via their filterhead ends.

5. A filter used in the fluid filtering system, according to claim 1, in which its structure allows the reversal of the flow.
